(19) Europäisches Patentamt
European Patent Office
Office européen des brevets

(11) EP 3 608 101 A1

(12) **EUROPEAN PATENT APPLICATION**
published in accordance with Art. 153(4) EPC

(43) Date of publication:
**12.02.2020 Bulletin 2020/07**

(21) Application number: **18781019.7**

(22) Date of filing: **02.04.2018**

(51) Int Cl.:
***B32B 27/00*** (2006.01) ***B29C 47/06*** (2006.01)
***C09J 181/06*** (2006.01) ***C09J 201/00*** (2006.01)
***B29K 81/00*** (2006.01) ***B29L 7/00*** (2006.01)
***B29L 9/00*** (2006.01)

(86) International application number:
**PCT/JP2018/014131**

(87) International publication number:
**WO 2018/186355 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2017 JP 2017073901**
**10.11.2017 JP 2017216965**

(71) Applicant: **Denka Company Limited**
**Tokyo 103-8338 (JP)**

(72) Inventors:
- **FUJIWARA, Junpei**
**Isesaki-shi**
**Gunma 372-0855 (JP)**
- **IWASAKI, Takayuki**
**Shibukawa-shi**
**Gunma 377-8520 (JP)**
- **HIROKAW, Yasushi**
**Shibukawa-shi**
**Gunma 377-8520 (JP)**

(74) Representative: **Beckmann, Claus**
**Kraus & Weisert**
**Patentanwälte PartGmbB**
**Thomas-Wimmer-Ring 15**
**80539 München (DE)**

# (54) MULTILAYER FILM AND HEAT-RESISTANT ADHESIVE TAPE

(57) [Problem] The present invention is to provide: a film which is excellent in film moldability, is also excellent in heat resistance and transparency, and has a small shrinkage factor and a small heating weight loss ratio even under a high-temperature atmosphere; and a heat-resistant adhesive tape comprising the same.

[Solution] A multilayer film having alternately laminated therein one or more layers of each of a substrate layer (A) comprising a sulfone-based resin having a glass transition temperature of 200°C or more and an adhesive layer (B) comprising a thermoplastic resin having a glass transition temperature of 190°C or more, and a multilayer film excellent in film moldability, heat resistance, and transparency is obtained due to at least one outermost layer of the multilayer film comprising the adhesive layer (B) and the arithmetic mean surface roughness Ra of a surface of at least one outermost layer of the multilayer film being greater than 0.1 μm and less than 10.0 μm.

[Figure 1]

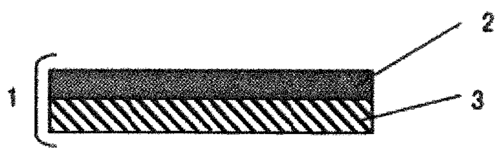


EP 3 608 101 A1

## Description

## TECHNICAL FIELD

The present invention pertains to: a multilayer film which is excellent in film moldability, is also excellent in heat resistance and transparency, and has a small shrinkage factor and a small heating weight loss ratio even under a high-temperature atmosphere; and a heat-resistant adhesive tape comprising the same.

## BACKGROUND ART

In recent years, a tendency for electronic members to be made smaller and lighter has led to many plastic products being used. In particular, plastic films are often used in sites where flexibility is demanded. Accompanying this, there have been many investigations into compositing techniques, namely techniques of laminating plastic films and metal foils and also techniques of vapor depositing and techniques of sputtering on plastic films. Further, there are also cases in which solder is used to fix electronic components on plastic film substrates.

During compositing and during solder reflow processes, high-temperature heat is generally applied to a plastic film. Accompanying the recent needs for high capabilities, heat resistance demanded of plastic films has become even stricter. A specific heat resistance capability demanded of plastic films is that dimensional change does not readily occur in a plastic film due to heat, and in cases in which, for example, a metal foil is laminated, since warping occurs in a laminated body if dimensional change occurs in the plastic film due to heat, a film having a small thermal shrinkage factor is demanded.

Polyimide resins are often used as plastic films which satisfy the heat resistance mentioned above (for example, Patent Document 1). However, polyimide resins are not thermoplastic and films thereof are obtained using a solvent casting method and therefore mold processing is difficult. Additionally, not only is the product price high, but there have also been cases of outgassing occurring, wherein a solvent remaining in a polyimide film emerges as an outgas when exposed to a high-temperature environment, and electronic components becoming contaminated. For this reason, a heat-resistant thermoplastic plastic film that is cheaper than a polyimide film and has little outgassing has been demanded. Further, since such a plastic film is useful as, for example, a substrate for a heat-resistant adhesive tape indicated below, the importance thereof has become even greater.

There follows a description of a heat-resistant adhesive tape having an adhesive agent laminated thereon. Paper, cloth, non-woven fabrics, plastic films, etc. are widely used as substrates for adhesive tapes, and it is demanded, in particular for masking tapes used during the production of printed circuit boards and for heat-resistant adhesive tapes used for fixing other electronic components, that heat-resistant capabilities be of an extent such that peeling does not occur in a solder bath or calcination process in which temperatures exceed 200°C. Single layer films, such as polyethylene naphthalate films, polyphenylene sulfide films, and polyether ether ketone films, comprising a thermoplastic plastic which can be melt-extruded and molded have been proposed as substrates for heat-resistant adhesive tapes such as those mentioned above (for example, Patent Documents 2 and 3). However, in recent processes for producing electronic components, there are fewer cases of a component having an adhesive tape affixed thereto being exposed to a temperature of 250°C or more, and in the films mentioned above, there are sometimes cases of the thermal shrinkage factor being large and the heat resistance being insufficient.

To address these problems, a heat-resistant film using a polyether sulfone has been proposed but film moldability was a problem. Patent Document 4 proposes a polyether sulfone sheet having a maximum value of surface roughness (Rmax) of 0.1 $\mu$m or less. However, in cases in which, for example, the thickness of the sheet was thin, when the surface roughness was small, the friction coefficient of the surface sometimes became too large, wrinkles were sometimes readily included when the sheet was rolled up, and it was sometimes impossible to obtain a desired sheet.

Further, adding a plate-shaped filler to a polyether sulfone resin has been reported (for example, Patent Documents 5 and 6). However, adding a plate-shaped filler not only resulted in transparency significantly decreasing, but also sometimes led to difficulty in melt-extrusion molding due to a deterioration in flowability.

## CITATION LIST

## PATENT LITERATURE

Patent Document 1: JP 2013-193413 A

Patent Document 2: JP H01 -266177 A

Patent Document 3: JP 2003-249617 A

Patent Document 4: JP 2000-233436 A

Patent Document 5: JP 2004-168962 A

Patent Document 6: JP 2005-103951 A

## SUMMARY OF INVENTION

## TECHNICAL PROBLEM

The present invention provides: a film which is excellent in film moldability, is also excellent in heat resistance and transparency, and has a small shrinkage factor and a small heating weight loss ratio even under a high-temperature atmosphere; and a heat-resistant adhesive tape comprising the same. Further, the present invention provides a heat-resistant adhesive tape which can be suitably used as a masking tape for vacuum vapor deposition or vacuum sputtering, being excellent in heat resistance and not peeling away even in relation to film stress during vacuum vapor deposition or vacuum sputtering.

## SOLUTION TO PROBLEM

In other words, the present invention is configured as described below.

(1) A multilayer film having alternately laminated therein one or more layers of each of a substrate layer (A) including a sulfone-based resin having a glass transition temperature of 200°C or more and an adhesive layer (B) including a thermoplastic resin having a glass transition temperature of 190°C or more, wherein: at least one outermost layer of the multilayer film comprises the adhesive layer (B); and an arithmetic mean surface roughness Ra of a surface of at least one outermost layer of the multilayer film is greater than 0.1 μm and less than 0.5 μm.

(2) A multilayer film having alternately laminated therein one or more layers of each of a substrate layer (A) including a sulfone-based resin having a glass transition temperature of 200°C or more and an adhesive layer (B) including a thermoplastic resin having a glass transition temperature of 190°C or more, wherein: at least one outermost layer of the multilayer film comprises the adhesive layer (B); and an arithmetic mean surface roughness Ra of a surface of at least one outermost layer of the multilayer film is 0.5 μm or more and less than 10.0 μm.

(3) The multilayer film described in (1) or (2), wherein the sulfone-based resin of the substrate layer (A) is at least one selected from the group consisting of polyether sulfone and polyphenyl sulfone, and the thermoplastic resin of the adhesive layer (B) is at least one selected from the group consisting of polyether imide, polyether sulfone, polyphenyl sulfone, thermoplastic polyimides, and polyarylates.

(4) The multilayer film described in (3), wherein the polyarylate used is a heat-resistant polyarylate having a glass transition temperature (Tg) of 245°C or more.

(5) The multilayer film described in any one of (1) to (4), wherein at least one layer of the substrate layer (A) and the adhesive layer (B) includes at least one additive selected from a thermal stabilizer, a UV absorption agent, an antistatic agent, a glidant, a dye, and a pigment.

(6) The multilayer film described in any one of (1) to (5), wherein: the overall thickness of the multilayer film is 20 μm or more and 150 μm or less; and the proportion of the thickness of the substrate layer (A) is 35% or more and 80% or less.

(7) The multilayer film described in any one of (1) to (6), having: a thermal shrinkage factor after being exposed to an environment of 230°C for 15 minutes of 1.0% or less; and a thermal shrinkage factor after being exposed to an environment of 250°C for 15 minutes of 5.0% or less.

(8) The multilayer film described in any one of (1) to (7), having a heating weight loss ratio, when exposed to an environment of 250°C for one hour, of 5% or less.

(9) The multilayer film described in any one of (1) to (8), having a light transmittance at a 400 nm wavelength of 80% or more.

(10) A heat-resistant adhesive tape formed by laminating an adhesive agent layer on the adhesive layer (B) of the multilayer film described in any one of (1) to (9).

(11) The heat-resistant adhesive tape described in (10), wherein only the substrate layer (A) includes at least one additive selected from a thermal stabilizer, a UV absorption agent, an antistatic agent, a glidant, a dye, and a pigment.

(12) The heat-resistant adhesive tape described in (10) or (11), wherein the heat-resistant adhesive tape is a masking tape.

(13) A method for producing the multilayer film described in any one of (1) to (9), wherein the substrate layer (A) including a sulfone-based resin having a glass transition temperature of 200°C or more and the adhesive layer (B) including a thermoplastic resin having a glass transition temperature of 190°C or more are laminated using a co-extrusion method and a film that is melt-extruded from a T-die at a resin temperature of 330°C or more is caused to contact a metal roll having a surface temperature of 110°C or more to mold the multilayer film.

## ADVANTAGEOUS EFFECTS OF INVENTION

Due to the present invention, it is possible to provide a multilayer film which is excellent in film moldability, is also excellent in heat resistance and transparency, and has a small shrinkage factor and a small heating weight loss ratio even under a high-temperature atmosphere. Furthermore, it is possible to provide a heat-resistant adhesive tape using this multilayer film. Further, due to the present invention, it is possible to provide a heat-resistant adhesive tape which can be suitably used as a masking tape for vacuum vapor deposition or vacuum sputtering, being excellent in heat resistance and not peeling away even in relation to film stress during vacuum vapor deposition or vacuum sputtering.

## BRIEF DESCRIPTION OF DRAWINGS

Figure 1 is a cross-sectional diagram showing one example of a layer configuration of the multilayer film of the present invention.

Figure 2 is a cross-sectional diagram showing one example of a layer configuration of the multilayer film of the present invention.

Figure 3 is a cross-sectional diagram showing one example of a layer configuration of the multilayer film of the present invention.

Figure 4 is a cross-sectional diagram showing one example of a layer configuration of the heat-resistant adhesive tape of the present invention.

Figure 5 is a cross-sectional diagram showing one example of a layer configuration of the heat-resistant adhesive tape of the present invention.

Figure 6 is a cross-sectional diagram showing one example of a layer configuration of the heat-resistant adhesive tape of the present invention.

## DESCRIPTION OF EMBODIMENTS

The present invention is described in detail below using preferred examples. However, the present invention is not limited to these examples. The multilayer film of the present invention has alternately laminated therein one or more layers of each of a substrate layer (A) and an adhesive layer (B), and at least one outermost layer of the multilayer film comprises the adhesive layer (B). Figures 1-3 each show one example of the multilayer film of the present invention, which in the case of Figure 1 is a laminated film comprising the substrate layer (A) and the adhesive layer (B). In the case of Figure 2, the example is a film in which one layer of the adhesive layer (B) is laminated on each of the two surfaces of the substrate layer (A). In the case of Figure 3, the example is a film in which a first substrate layer (A) and

a second substrate layer (A) are laminated, respectively, on the two surfaces of a first adhesive layer (B), and further, a second adhesive layer (B) and a third adhesive layer (B) are laminated, respectively, on the first substrate layer (A) and the second substrate layer (A).

Further, Figures 4-6 each show one example of a heat-resistant adhesive tape in which an adhesive agent is laminated on the multilayer film of the present invention. In the case of Figure 4, the example is a heat-resistant adhesive tape in which an adhesive agent layer is laminated on a surface of the adhesive layer (B) of the multilayer film of Figure 1. In the case of Figure 5, the example is a heat-resistant adhesive tape in which an adhesive agent layer is laminated on one surface of the adhesive layer (B) of the multilayer film of Figure 2. In the case of Figure 6, the example is a heat-resistant adhesive tape in which an adhesive agent layer is laminated on both surfaces of the adhesive layer (B) of the multilayer film of Figure 3.

**Substrate layer (A)**

The substrate layer (A) includes a sulfone-based resin having a glass transition temperature of 200°C or more. The glass transition temperature of the sulfone-based resin is preferably 220°C or more, and more preferably 225°C or more. When the glass transition temperature is less than 200°C, the thermal shrinkage factor becomes large. Examples of such sulfone-based resins include polyphenyl sulfone (glass transition temperature 220°C) and polyether sulfone (glass transition temperature 225°C). In the present description, a DSC measurement was carried out in compliance with JIS K 7121 by using a differential scanning calorimeter, under a nitrogen atmosphere and with a temperature increase rate of 10°C/min. from room temperature to 380°C, and the glass transition temperature was defined as the point of intersection between: a straight line equidistant in the vertical axis direction from a straight line extended from each baseline in the DSC curve; and a curve of a step-like changing portion of glass transition.

The sulfone-based resin constituting the substrate layer (A) is not particularly limited, but a polyphenyl sulfone having a repeating unit represented by Chemical Structure (1) is preferable, and a polyether sulfone having a repeating unit represented by Chemical Structure (2) is more preferable. One or more kinds of polyphenyl sulfone and/or polyether sulfone may be selected and used.

The polyphenyl sulfone (PPSU) may be a homopolymer consisting of the chemical structure of Chemical Structure (1) and may also include one or more chemical structures selected from Chemical Structures (2) to (10). However, when there is high ratio of the chemical structure of Chemical Structure (1) in the polyphenyl sulfone, film strength, heat resistance, and mold processability are excellent and therefore, with respect to a Chemical Structures (1)-(10) unit total of 100 mol%, units of Chemical Structure (1) are preferably 50 mol% or more, and more preferably 80 mol% or more. In the case that the polyphenyl sulfone is a copolymer including a chemical structure of Chemical Structures (2)-(10), the copolymer form may be any of a block copolymer, a random copolymer, and an alternating copolymer. Further, it may be a terminal-modified body having another chemical structure in only a polymer terminal. Specific examples of the polyphenyl sulfone include the Radel R series (product name; manufactured by Solvay Specialty Polymers) and the Ultrason P series (product name; manufactured by BASF).

The polyether sulfone (PES) may be a homopolymer consisting of the chemical structure of Chemical Structure (2) and may also include one or more chemical structures selected from (1) and (3)-(10). However, when there is high ratio of the chemical structure of Chemical Structure (2) in the polyether sulfone, film strength, heat resistance, and mold processability are excellent and therefore, with respect to a Chemical Structure (1)-(10) unit total of 100 mol%, units of Chemical Structure (2) are preferably 50 mol% or more, and more preferably 80 mol% or more. In the case that the polyether sulfone is a copolymer including one or a plurality of chemical structures selected from (1) and (3)-(10), the copolymer form may be any of a block copolymer, a random copolymer, and an alternating copolymer. Further, it may be a terminal-modified body having another chemical structure in only a polymer terminal. Specific examples of the polyether sulfone include the Sumika Excel PES series (product name; manufactured by Sumitomo Chemical Company), the Ultrason E series (product name; manufactured by BASF), and the Veradel R series (product name; manufactured by Solvay Specialty Polymers).

[Formula 1]

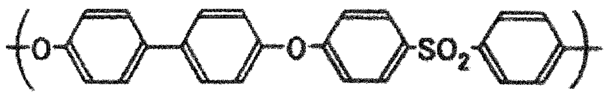
(1)

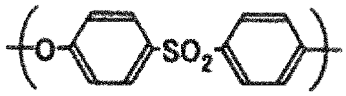
(2)

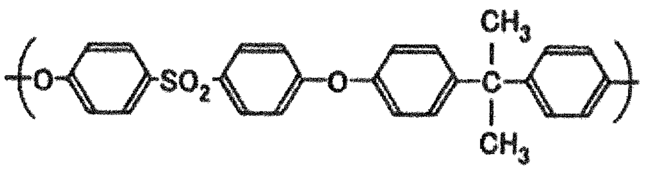
(3)

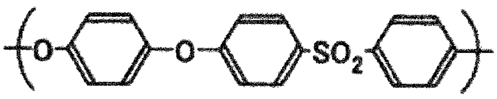
(4)

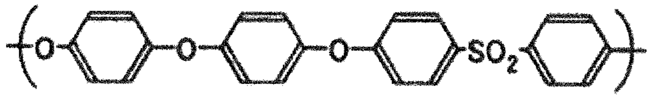
(5)

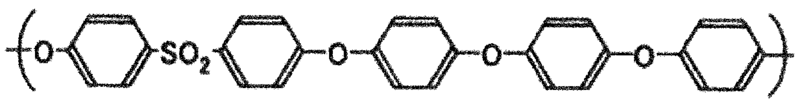
(6)

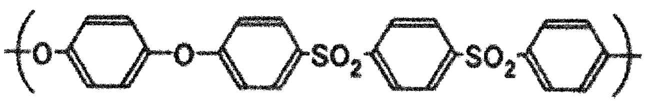
(7)

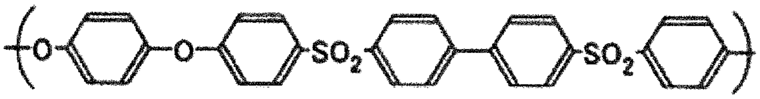
(8)

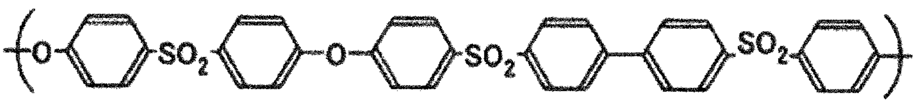
(9)

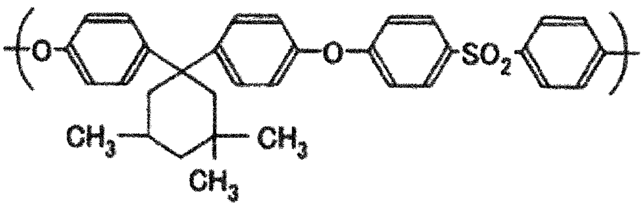
(10)

**Adhesive layer (B)**

The adhesive layer (B) is a layer that adheres to the substrate layer (A) and comprises a thermoplastic resin having a glass transition temperature of 190°C or more. The definition of the glass transition temperature and the measurement method thereof are the same as for the substrate layer (A). From the perspective of heat resistance, the glass transition temperature is preferably 220°C or more, and more preferably 225°C or more. When the glass transition temperature is less than 190°C, not only does the thermal shrinkage factor become large, but warpage of a film laminated with the substrate layer (A) using a coextrusion method becomes large.

At least one selected from the group consisting of polyether imides (PEI), thermoplastic polyimides (TPI), polyarylates (PAR), and the same sulfone-based resin as the substrate layer (A) can be suitably used as the resin constituting the adhesive layer (B). Further, at least one alloy, in other words, a composite resin, selected from the group above can also be used as the resin constituting the adhesive layer (B). Furthermore, it is preferable to use polyether sulfone as the resin constituting the adhesive layer (B), for being particularly excellent in heat resistance. Further, it is

preferable to use a polyarylate (PAR) for being excellent in heat resistance and close adhesion with the adhesive agent. Here, a polyarylate is a polycondensate of a dihydric phenol component and an aromatic dicarboxylic acid, and is a polymer that has, for example, a repeating unit represented by General Chemical Structure (11). Representative examples of commercially available polyarylates include a polyarylate comprising: bisphenol A as the dihydric phenol; and a mixed phthalic acid comprising terephthalic acid and isophthalic acid as the aromatic dicarboxylic acid. By changing the monomer composition ratio of the foregoing components, it is possible to improve heat resistance (raise Tg). Preferably, a heat-resistant polyarylate having a glass transition temperature (Tg) of 245°C or more, and more preferably 255°C or more, is used. By using a heat-resistant polyarylate, it is possible to make the thermal shrinkage factor, particularly at 250°C, smaller. When a heat-resistant polyarylate is used in a tape, it is possible to improve the heat resistance and durability of the tape under harsh conditions such as a vacuum sputtering process, and is therefore preferable. The polyarylate and heat-resistant polyarylate described above are available as, for example, U polymer and Unifiner (product names; manufactured by Unitika Ltd.).

[Formula 2]

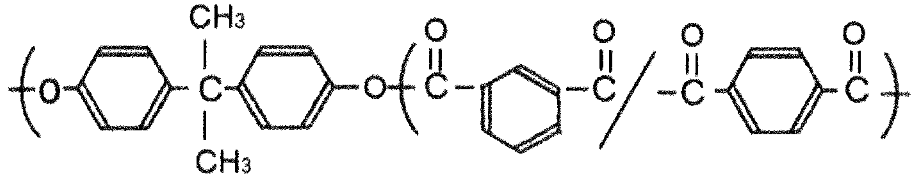
(11)

The multilayer film of the present invention has laminated therein one or more layers of each of a substrate layer (A) and an adhesive layer (B), at least one of the two outermost layers of the multilayer film comprises the adhesive layer (B), and preferably both of the outermost layers of the multilayer film comprise the adhesive layer (B). By configuring multiple layers of the substrate layer (A) and the adhesive layer (B), it is possible to make the thermal shrinkage factor small in comparison with a single layer configuration. Furthermore, by disposing the adhesive layer (B) on both surfaces of the outermost layers of the multilayer film, it is possible to further reduce the thermal shrinkage factor in comparison with the case in which the adhesive layer (B) is disposed on only one of the surfaces.

In a certain embodiment of the present invention, the arithmetic mean surface roughness Ra of a surface of at least one of the outermost layers of the multilayer film is greater than 0.1 μm and less than 0.5 μm, more preferably 0.2 μm or more and less than 0.4 μm, and even more preferably 0.2 μm or more and 0.3 μm or less. When the arithmetic mean surface roughness Ra is greater than 0.1 μm, wrinkles are not readily included when the film is rolled up, it is easier to obtain a roll of good film, and the action of winding up becomes easy. Meanwhile, when the arithmetic mean surface roughness Ra is less than 0.5 μm, high transparency of the film can be obtained. Further, in the case in which the adhesive agent is laminated on a surface having an arithmetic mean surface roughness Ra of less than 0.5 μm, air bubbles are not readily included and a good appearance can be obtained. In the present description, it is possible to calculate the arithmetic mean surface roughness in compliance with JIS B 0601.

Further, in a different embodiment of the present invention, the arithmetic mean surface roughness Ra of a surface of at least one of the outermost surfaces of the multilayer film is 0.5 μm or more and less than 10.0 μm, more preferably 0.6 μm or more and less than 5.0 μm, and even more preferably 0.6 μm or more and 3.0 μm or less. By configuring the arithmetic mean surface roughness Ra to be within these ranges, in the same manner as above, wrinkles are not readily included when the film is rolled up and it is easy to obtain a good film. In addition, when the arithmetic mean surface roughness Ra is 0.5 μm or more, lifting of the adhesive tape after vacuum sputtering does not readily occur when the multilayer film is used as an adhesive tape. Further, by configuring the arithmetic mean surface roughness Ra of a surface of at least one of the outermost layers of the multilayer film to be within the ranges mentioned above, it is possible to provide a heat-resistant adhesive tape which can be suitably used as a masking tape for vacuum vapor deposition or vacuum sputtering, being excellent in heat resistance and not peeling away even in relation to film stress during vacuum vapor deposition or vacuum sputtering.

Methods for forming microscopic asperities in the multilayer film surface so that the arithmetic mean surface roughness Ra of a surface of at least one of the outermost layers of the multilayer film is greater than 0.1 μm and less than 10.0 μm include: (i) a method of extruding a melt-kneaded resin from a T-die and sandwiching using a metal roll and a separate pressure-bonding roll to form a film, wherein formation of the asperities is carried out simultaneously with cooling of the film using a metal roll having microscopic asperities; and (ii) a method of forming asperities by producing a multilayer film and then causing the film to closely contact a metal roll having microscopic asperities. Among these, method (i) is preferable from the perspective of requiring fewer devices.

It is possible for at least one publicly-known additive which is generally added to a film, such as a thermal stabilizer, a UV absorption agent, an antistatic agent, a glidant, a dye, and a pigment to be included, as necessary, in

at least one layer of the substrate layer (A) and the adhesive layer (B) of the present multilayer film. Further, it is possible to mix and use a scrap resin that was produced in the film production step.

With respect to 100 parts by mass of the resin constituting the substrate layer (A) or the adhesive layer (B), the total blended amount of the additive is preferably 10 parts by mass or less, more preferably 5 parts by mass or less, and even more preferably 1 part by mass or less. If the blended amount of the additive is within these ranges, it is possible to use the substrate layer (A) and/or the adhesive layer (B) without lowering transparency and moldability.

The method for mixing/kneading the additive with the substrate layer (A) or the adhesive layer (B) is not particularly limited and any kind of mixing/kneading means may be used. For example, each of the above components may be fed individually into an extruder and mixed. Further, the additive may be preliminarily dry-kneaded with the resin constituting the substrate layer (A) or the adhesive layer (B) in advance using a mixer such as a Henschel mixer, a ball mixer, a blender, or a tumbler, and then melt-kneaded in a melt-kneader.

A mixing roll, a compression kneader, a single screw extruder, or a multiple screw extruder may be used as the melt-kneader. When a single screw extruder or multiple screw extruder is used, a strand form, a sheet form, or a rod form is obtained and therefore processing into a powder form, a granular form, or a pellet form using a pulverizer or a cutter is preferable.

The overall thickness of the multilayer film of the present invention is preferably 20 μm or more and 150 μm or less, more preferably 25 μm or more and 75 μm or less, and even more preferably 35 μm or more and 50 μm or less. When the overall thickness is 150 μm or less, good transparency can be obtained and it is possible to suppress the problem of increased costs, which is economically preferable. When the overall thickness is 20 μm or more, the thermal shrinkage factor can be suppressed and, further, wrinkles are not readily included when the film is rolled up.

The proportion of the thickness of the substrate layer (A) is preferably 35% or more and 80% or less, more preferably 40% or more and 70% or less, and even more preferably 50% or more and 60% or less of the overall thickness. When the proportion of the thickness of the substrate layer (A) is 35% or more, the thermal shrinkage factor decreases, and further, when the thickness of the substrate layer (A) is 80% or less, it is easy to obtain uniform thickness accuracy.

The preferred thermal shrinkage factor of the multilayer film of the present invention is as described below. The absolute value of the thermal shrinkage factor after being exposed for 15 minutes to a 200°C environment is 1.0% or less, more preferably 0.5% or less, and even more preferably 0.2% or less. Further, the thermal shrinkage factor after being exposed for 15 minutes to a 250°C environment is 5.0% or less, more preferably 3.0% or less, and even more preferably 2.0% or less. When the thermal shrinkage factor is within the ranges mentioned above, heat-resistant dimensional stability is sufficient for practical usage, and further, a heat-resistant adhesive tape using the multilayer film of the present invention does not experience peeling away or anchor breakage of the tape even when exposed to a high-temperature environment of 200°C or more, and therefore after the tape is removed there is also little occurrence of adhesive residue on an adherend. Thus, the tape can be used suitably.

In the present description, the thermal shrinkage factor was measured in compliance with JIS C 2151. Specifically, a test piece (major axis 150 mm × minor axis 20 mm) was cut out from each of the MD direction and the TD direction, and marks having an interval therebetween of 100 mm were made with the center of the major axis direction of the test piece serving as the center. This test piece was exposed in an unloaded state for 15 minutes to an atmospheric temperature of 200°C or 250°C, and after being cooled to room temperature, the length between the marks was measured and a calculation using the following calculation formula was performed. Regarding the value of the thermal shrinkage factor, a positive value signifies a shrinkage and a negative value signifies an expansion. It should be noted that MD indicates the length (extrusion) direction of the film and TD indicates the width direction of the film. The preferred multilayer film of the present invention can satisfy the thermal shrinkage factor conditions in both the MD and TD directions.

$$\text{Thermal shrinkage factor (\%)} = [(\text{length before test} - \text{length after test}) / (\text{length before test})] \times 100$$

The heating weight loss ratio of the multilayer film of the present invention after being exposed to a 250°C environment for one hour is 5% or less, more preferably 3% or less, and even more preferably 1.5% or less. Regarding the heating weight loss ratio, it is possible to determine the weight loss ratio in compliance with JIS K 7102 from a TG curve obtained by carrying out differential thermogravimetry, increasing the temperature to 250°C at a temperature increase rate of 10°C/min. and then further maintaining a 250°C environment for 30 minutes. When the heating weight loss ratio is less than 5%, outgassing does not readily occur in a high-temperature process during electronic component production and there is a low possibility of electronic components and equipment in the vicinity thereof being contaminated. Further, a vacuum process requires a shorter time for a prescribed vacuum level to be reached and is economical.

The light transmittance of the multilayer film of the present invention at the 400 nm wavelength is 80% or more, and most preferably 85% or more. A light transmittance within the ranges mentioned above enables the multilayer film to be suitably used in a process wherein, after an adhesive agent layer has been laminated on the multilayer film, the

adhesive agent is cured by irradiating with ultraviolet light from the multilayer film surface side. In the present description, it is possible to calculate the light transmittance in compliance with JIS K 0115.

The total light transmittance of the multilayer film of the present invention, measured in compliance with JIS K 7361-1 is preferably 75% or more, more preferably 80% or more, and even more preferably 85% or more. Further, the haze value of the multilayer film of the present invention, measured in compliance with JIS K 7136-1 is preferably 35% or less, more preferably 30% or less, and even more preferably 25% or less. When the total light transmittance and the haze value are within the ranges mentioned above, the multilayer film of the present invention has sufficient transparency, and from the perspective of visibility, is suitable particularly when used as a heat-resistant adhesive tape for masking.

A publicly-known method such as a co-extrusion method, an extrusion lamination method, or a thermal lamination method may be employed as a method for molding the multilayer film of the present invention, and a co-extrusion method is preferable. In a co-extrusion method, it is possible to obtain the multilayer film by melt-kneading the sulfone-based resin constituting the substrate layer (A) and the thermoplastic resin constituting the adhesive layer (B) using separate single screw extruders, then laminating by means of a co-extrusion method, and contacting with a metal roll that has been heated so as to have a surface temperature of 110°C or more. For the co-extrusion method, it is possible to use a publicly-known technique such as a method of laminating using a multi-manifold die, and a method of extruding from a T-die after laminating using a feed block.

The temperature of the resin extruded from a T-die lip end portion is preferably 330°C or more and less than 400°C, more preferably 360°C or more and less than 390°C, and even more preferably 370°C and less than 380°C. When the temperature is within the ranges mentioned above, it is easy to obtain a film having excellent uniformity of thickness. When the temperature is 330°C or more, resin that has separated from the T-die end portion does not readily cool and solidify before touching the metal roll, and it is easy to obtain a film having uniform thickness. Further, the thermal shrinkage factor readily becomes small. When the temperature is less than 400°C, the resin does not readily thermally degrade and the appearance of the film is good.

The surface temperature of metal roll is preferably 110°C or more and 230°C or less, more preferably 130°C or more and 200°C or less, and even more preferably 140°C or more and 190°C or less. When the temperature is within the ranges mentioned above, it is possible to obtain a film having a small thermal shrinkage factor. Further, by matt processing the surface of the metal roll, it is possible to obtain a film surface having a prescribed surface roughness. When the metal roll temperature is 230°C or less, the film and the metal roll do not readily adhere to one another, it is easy to smoothly peel the film from the metal roll, and the appearance of the film is good.

The lip interval of the die is preferably 5 times or more and less than 30 times the film thickness, and more preferably 10 times or more and less than 20 times. When the lip interval of the die is 5 times or more the film thickness, an action for stretching the melt-extruded film from the die becomes large, an increase in surface roughness of the film can be suppressed, a die line does not readily occur, and the appearance of the film is good. When the lip interval is less than 30 times the film thickness, in addition to such effects as the stretching action not having a great effect on the melt-extruded film and it being easy to obtain a film having uniform thickness, the thermal shrinkage factor also becomes small.

Further, in order to improve the wettability of the multilayer film surface, a publicly-known easy adhesion treatment such as corona treatment, plasma treatment, ozone treatment, flame treatment, alkali treatment, vapor deposition treatment, and primer treatment may be applied, as needed, to one surface or both surfaces of the multilayer film of the present invention. By carrying out these treatments, it is possible to improve the close adhesive force to the multilayer film when laminating with a metal foil or when an adhesive agent layer described below is laminated.

The multilayer film of the present invention can be suitably used, as a substitute for a polyimide film, in a flexible printed circuit (FPC), a film-type substrate for a semiconductor package (TAB and COF), and a substrate film used in a laminated body such as a heat-resistant adhesive tape. Further, due to excellent transparency, it can also be suitably used as: a substrate film used in a laminated body of a flexible photovoltaic cell or a touch panel; a cover window for a flexible display; a TFT substrate; and as a conductive circuit protective coverlay film that protects a surface of a substrate.

(Heat-resistant adhesive tape)

The following is a description of a heat-resistant adhesive tape using the multilayer film of the present invention. The heat-resistant adhesive tape of the present invention comprises the multilayer film mentioned above and an adhesive agent layer formed on the multilayer film. The adhesive agent layer is provided to the adhesive layer (B) side of the multilayer film. The adhesive agent layer may be formed on only one surface or may be formed on both surfaces. Adhesive components of the adhesive agent constituting the adhesive agent layer are not particularly limited and may be selected, as appropriate, from among publicly-known adhesive agents by considering the adhesiveness thereof to a resin film substrate or a casing to which the heat-resistant adhesive tape using this substrate film is to be affixed. Specifically, for example, acrylic resins, urethane resins, silicones, synthetic rubbers, natural rubbers, etc. may be used, and among these, acrylic resins and silicones are preferable for having good adhesiveness and being excellent in

transparency and heat resistance.

The thickness of the adhesive agent layer is preferably 15-40 μm. When the thickness of the adhesive agent layer is 15 μm or more, it is possible to secure sufficient adhesiveness, and when 40 μm or less, it is easy to form the adhesive agent layer.

When using the multilayer film of the present invention as a substrate film for a heat-resistant adhesive tape, it is possible to configure so that preferably only the substrate layer (A) includes at least one additive selected from a thermal stabilizer, a UV absorption agent, an antistatic agent, a glidant, a dye, and a pigment. When an additive mentioned above is included in the adhesive layer (B), the additive moves to the surface of the adhesive layer (B). Due thereto, the close adhesive force between the adhesive agent layer described below and the adhesive layer (B) decreases and, when the tape is removed, partial peeling away (anchor breakage) between the adhesive layer (B) and the adhesive agent layer may occur, and adhesive residue may be left on the adherend. Further, there may be non-preferable cases in which the additive hinders a curing reaction of the adhesive agent and it is difficult to obtain a desired adhesive force. With respect to 100 parts by mass of the resin constituting the substrate layer (A), the blended amount of the additive is preferably 10 parts by mass or less, more preferably 5 parts by mass or less, and even more preferably 1 part by mass or less. If the blended amount of the additive is within these ranges, it is possible to use the substrate layer (A) without lowering transparency and moldability. The method for mixing/kneading the additive and the substrate layer (A) is as described above.

Examples of methods for producing the heat-resistant adhesive tape include: a method of coating the adhesive agent directly onto a surface of the multilayer film (direct coating method); and a method of coating the adhesive agent onto a surface of a release paper or release film to form the adhesive agent layer, and then sticking this adhesive agent layer and the multilayer film together (transfer method). The method of coating the adhesive agent is not particularly limited and a conventional, publicly-known method may be used. Examples of methods for forming by printing include a gravure printing method, a flexographic printing method, and an offset printing method. Examples of methods performed by coating include roll coating, reverse coating, comma coating, knife coating, die coating, and gravure coating. After the adhesive agent layer is formed, in order to cross-link the adhesive agent layer by heating, it is preferable to carry out aging from several hours to approximately three days at, for example, a temperature of 40-100°C. Aging promotes cross-link reactions and makes it possible to secure a sufficient adhesive force during use and detachability after use.

Since the heat-resistant adhesive tape of the present invention uses the multilayer film described above, the heat resistance and transparency are excellent and, even under a high-temperature atmosphere, the shrinkage factor is small and the heating weight loss ratio is small. Therefore, the heat-resistant adhesive tape of the present invention can be suitably used as an adhesive label, a tape used in electronic component production, a masking tape, a tape for fixing a substrate in a chip size package mounting process, and a spacing tape used in a film-type substrate manufacturing process. In particular, the heating weight loss ratio being small is suitable because a small amount of outgas is produced when used as a heat-resistant adhesive tape or film used in a vacuum process, and therefore there is little contamination of process equipment, or the time required to reach a prescribed vacuum level is short. For this reason, the heat-resistant adhesive tape of the present invention is particularly useful as a masking tape used in a vacuum process.

## EXAMPLES

The present invention is described in detail below. However, the present invention is not limited by these descriptions.

The resins used in the substrate layer (A) and the adhesive layer (B) in the Examples and Comparative Examples are as described below.

Polyether sulfone (PES): Sumika Excel PES 4800G (product name), manufactured by Sumitomo Chemical Company, glass transition temperature 225°C

Polyphenyl sulfone (PPSU): Ultrason P 3010 (product name), manufactured by BASF, glass transition temperature 220°C

Polyether imide (PEI): ULTEM 1000 (product name), manufactured by SABIC, glass transition temperature 217°C

Polyarylate (PAR): U polymer U-100 (product name), manufactured by Unitika Ltd., glass transition temperature 193°C

Heat-resistant polyarylate (heat-resistant PAR): U polymer T-200 (product name), manufactured by Unitika Ltd., glass transition temperature 263°C

Thermoplastic polyimide (TPI): Aurum PL450C (product name), manufactured by Mitsui Chemicals, Inc., glass transition temperature 250°C

Polyether ether ketone (PEEK): VESTAKEEP 3000G (product name), manufactured by Daicel-Evonik Ltd., glass transition temperature 146°C

Polycarbonate (PC): Panlite K 1300 (product name), manufactured by Teijin Ltd., glass transition temperature 150°C

**Measurement of glass transition temperature**

Regarding the glass transition temperature of the thermoplastic resin used in the substrate layer (A) and the adhesive layer (B), using a differential scanning calorimeter "DSC 3100SA", manufactured by Bruker, a DSC measurement was carried out under a nitrogen atmosphere with a temperature increase rate of 10°C/min. from room temperature to 380°C, and the glass transition temperature was defined as the point of intersection between: a straight line equidistant in the vertical axis direction from a straight line extended from each baseline in the DSC curve; and a curve of a step-like changing portion of glass transition.

(Example 1)

**Production of multilayer film**

First, 1 part by mass of an organic pigment, Paliotol Yellow K 0961 (product name), manufactured by BASF, was added to 100 parts by mass of a polyether sulfone to serve as the resin constituting the substrate (A). The components were put into a container and preblended using a tumbler to obtain a stirred mixture. This stirred mixture was fed into a twin screw melt extruder having a diameter of 30 mm, melt-kneaded, discharged in a rod-shape from a die of an end portion and formed into strands. The melt-kneading conditions were set as: cylinder temperature 350-370°C; adapter temperature 370°C; and die temperature 370°C. Next, the formed strands were water-cooled and then cut using a pelletizer to obtain a pellet-shaped molding material having a length of 2-3 mm and a diameter of 1-2 mm.

Using this molding material and polyether sulfone as the resin constituting the adhesive layer (B), each component was extruded from a separate single screw extruder having a diameter of 40 mm, the substrate layer (A) and the adhesive layer (B) were laminated using a feed block method and then continuously discharged from a T-die having a width of 600 mm to obtain a multilayer film having two layers. The melt-kneading conditions for the substrate layer (A) and the adhesive layer (B) were set as: cylinder temperature 340-380°C; and T-die temperature 380°C. Further, the temperature of the resin extruded from the T-die lip end portion was 372°C.

The discharge amount of the extruder and drawing speed of the film were adjusted such that the thickness of the multilayer film was 27 μm and the thickness of the substrate layer (A) was 15 μm. Further, the lip interval of the T-die was adjusted so as to be 12 times the film width of 27 μm. The obtained multilayer film was sandwiched by a drawing machine pressure-bonding roll made of a silicone rubber and a metal roll comprising microscopic asperity shapes and having a surface with an arithmetic mean surface roughness Ra of 1.4 μm and was continuously transferred toward a winding machine. At that time, a flow passage of the feed block was adjusted so that the adhesive layer (B) surface side was caused to contact the metal roll. Further, the temperature of the metal roll was set to 180°C. During transfer, both edges of the multilayer film in the width direction were cut using a slit blade, and by continuously winding onto a winding tube (diameter 76 mm) of the winding machine, a roll of the multilayer film having a length of 100 m and a width of 400 mm was obtained.

**Production of heat-resistant adhesive tape**

Next, using the produced multilayer film, a heat-resistant adhesive tape was made with the procedure described below.

Firstly, 10 parts by mass of a cross-linking agent (product name: Coronate L; isocyanate-based cross-linking agent, solid content 45 mass%, manufactured by Tosoh Corporation) was blended with 100 parts by mass of an acrylic-based adhesive agent (acrylic resin: copolymer of ethyl acrylate, n-butyl acrylate, methyl methacrylate, and 2-hydroxyethyl acrylate; mass ratio of constituent monomers: ethyl acrylate/n-butyl acrylate/methyl methacrylate/2-hydroxyethyl acrylate (27/66/2/5); mass average molecular weight of the acrylic resin: approximately 600,000; solid content 45 mass%; manufactured by Negami Chemical Industries Co., Ltd.) and sufficiently dispersed by diluting with toluene to prepare a coating liquid for forming the adhesive agent layer, said coating liquid having a solid content of 20 mass%. Next, the adhesive layer (B) surface of the multilayer film was subjected to a corona treatment under conditions of 100 W/($m^2$·min), and the entirety of the adhesive layer (B) surface was coated by applying the coating liquid for forming the adhesive agent layer

thereto with an applicator to form the adhesive agent layer. After that, the multilayer film was put into a 100°C oven and dried for two minutes and prepared so that the thickness of the adhesive agent layer was 30 μm. Furthermore, in order to promote the cross-linking reaction of the adhesive agent layer, a three-day post-cure was carried out using a 40°C oven and a heat-resistant adhesive tape was produced.

(Examples 2-10 and Comparative Examples 1-3)

Apart from changing the resin used in the substrate layer (A), the resin used in the adhesive layer (B), the thicknesses of the multilayer film and the substrate layer (A), the lamination conditions of the adhesive layer (B) (laminating on one side or both sides of the substrate layer (A)) as described in Table 1 and Table 2, the multilayer films and the heat-resistant adhesive tapes were produced in the same way as Example 1.

(Comparative Example 4)

A molding material was obtained without providing the adhesive layer (B) and by adding 1 part by mass of an organic pigment (Paliotol Yellow K 0961 (product name), manufactured by BASF) to 100 parts by mass of the polyether sulfone to serve as the resin constituting the substrate (A) and melt-kneading using the same method as Example 1. This was extruded from a single screw extruder having a diameter of 40 mm to produce a single layer film having a thickness of 25 μm and a heat-resistant adhesive tape.

(Comparative Example 5)

Apart from changing the metal roll to a roll comprising microscopic asperity shapes and having a roll surface with an arithmetic mean surface roughness Ra of 0.1 μm, a multilayer film and heat-resistant adhesive tape were produced in the same way as Example 1.

(Comparative Example 6)

A commercially available polyimide film (Upilex 25S, manufactured by Ube Industries, Ltd., thickness 25 μm) was used. Further, a heat-resistant adhesive tape was made using this film.

(Comparative Example 7)

A commercially available biaxially stretched polyethylene naphthalate film (Teonex Q51, manufactured by Teijin Ltd., thickness 25 μm) was used. Further, a heat-resistant adhesive tape was made using this film.

**Evaluation of laminated film**

The evaluations indicated below were carried out for the film produced in each Example and each Comparative Example. These results are collectively shown, respectively, in Table 1 and Table 2. It should be noted that in the production of the multilayer film, cases in which it was not possible to obtain sufficient samples for evaluation due to winding wrinkles are described as being unevaluated.

(Surface roughness)

The arithmetic mean surface roughness was calculated in compliance with JIS B 0601. Specifically, the arithmetic mean surface roughness Ra of the surface of the laminated film that contacted the metal roll was obtained by using a commercially available contact-type surface roughness gauge (Surftest SJ-210, manufactured by Mitutoyo Corporation) to measure, with a scanning width of 2 mm, five points in the width direction of the laminated film, and calculating the average value thereof.

(Thickness)

Thickness was measured using a commercially available standard-type dial gauge (547-315) manufactured by Mitutoyo Corporation. Specifically, the thickness was measured over 300 mm in the film longitudinal direction at 100 mm intervals, was also measured in the film width direction at 10 mm intervals, the average value of the foregoing values was determined and this average value was deemed to be the thickness of the film.

(Thermal shrinkage factor)

The thermal shrinkage factor was measured in compliance with JIS C 2151. Specifically, a test piece (major axis 150 mm × minor axis 20 mm) was cut out from each of the MD direction and the TD direction, and marks having an interval therebetween of 100 mm were made with the center of the major axis direction of the test piece serving as the center. This test piece was exposed in an unloaded state for 15 minutes to an atmospheric temperature of 200°C or 250°C, and after being cooled to room temperature, the length between the marks was measured and a calculation using the following calculation formula was performed. Regarding the value of the thermal shrinkage factor, a positive value signifies a shrinkage and a negative value signifies an expansion. It should be noted that MD indicates the length (extrusion) direction of the film and TD indicates the width direction of the film.

$$\text{Thermal shrinkage factor (\%)} = [(\text{length before test} - \text{length after test}) / (\text{length before test})] \times 100$$

(Light transmittance)

The light transmittance was measured in compliance with JIS K 0115. Specifically, light transmittance at the 400 nm wavelength was measured using a commercially available spectrophotometer (UV-2600, manufactured by Shimadzu Corporation). When the light transmittance is 80% or more, the multilayer film is, for example, suitable for a process wherein, after an adhesive agent layer has been laminated on the multilayer film, the adhesive agent is cured by irradiating with ultraviolet light from the multilayer film surface side.

(Transparency)

Using a commercially available haze meter (NDH 7000, manufactured by Nippon Denshoku Industries Co., Ltd.) the total light transmittance was measured in compliance with JIS K 7361-1 and the haze value was measured in compliance with JIS K 7136. For practical use, it is preferable that the total light transmittance is 70% or more and that the haze value is 40% or less.

(Winding wrinkles)

After 100 m of the films of Examples 1-10 and Comparative Examples 1-5 were rolled up using the winding machine, the entire width thereof was checked, with "Y" being used to show that winding wrinkles were visually confirmed and "N" being used when winding wrinkles were not confirmed.

**Evaluation of heat-resistant adhesive tape**

The evaluations indicated below were carried out for the heat-resistant adhesive tape produced in each Example and each Comparative Example. These results are collectively shown, respectively, in Table 1 and Table 2.

(Initial adhesive force)

Each heat-resistant adhesive tape obtained as described above was slit into 10 mm widths and pressure-bonded to an aluminum plate (100 mm square, thickness 0.5 mm, arithmetic mean surface roughness Ra = 1.0 μm) using one rotation of a 2 kg roller. The pressure-bonded sample was left to stand for 30 minutes at 23°C and then, in compliance with JIS Z 0237: 2000, the initial adhesive force thereof was measured under conditions of a detachment angle of 180°, a detachment speed of 300 mm/min., and a detachment distance of 50 mm. It should be noted that a universal testing machine (manufactured by Instron Japan) was used for the measurement.

Evaluation standards of the initial adhesive force are as described below.

◎: 1.0 N to 6.0 N/20 mm

○: 0.4 N to 1.0 N/20 mm, 6.0 N to 10.0 N/20 mm

×: less than 0.4 N/20 mm, 10.0 N/20 mm or more

(Confirmation of presence/absence of adhesive residue after heat treatment)

Each heat-resistant adhesive tape obtained as described above was slit into 10 mm widths and pressure-bonded to an aluminum plate (100 mm square, thickness 0.5 mm, arithmetic mean surface roughness Ra = 1.0 μm) using one rotation of a 2 kg roller. The pressure-bonded sample was left to stand for 30 minutes at 23°C, then left to stand for 60 minutes in a 250°C oven, and then left to stand for a further one hour at room temperature before a universal testing machine (manufactured by Instron Japan) was used to remove the heat-resistant adhesive tape under conditions of a detachment angle of 180°, a detachment speed of 300 mm/min., and a detachment distance of 50 mm and to observe a 10 mm × 40 mm range of the aluminum plate with a microscope at a magnification of 100×. The samples were evaluated using the following criteria. It should be noted that cases in which the tape came away from the aluminum plate after heating are described as being unmeasurable.

◎: No locations having adhesive residue

○: 1-9 locations having adhesive residue

×: 10 or more locations having adhesive residue

[Table 1]

[Table 2]

| | Type of resin | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Substrate layer (A) | PES | | ○ | ○ | ○ | - | ○ | ○ | ○ | ○ | ○ | - |
| | PPSU | | - | - | - | ○ | - | - | - | - | - | ○ |
| | Glass transition temperature of substrate layer (A) (°C) | | 225 | 225 | 225 | 220 | 225 | 225 | 225 | 225 | 225 | 220 |
| | Thickness of substrate layer (A) (μm) | | 15 | 15 | 18 | 19 | 19 | 19 | 20 | 15 | 15 | 20 |
| Adhesive layer (B) | PES | | ○ | ○ | ○ | ○ | - | - | - | - | - | - |
| | PPSU | | - | - | - | - | - | - | - | - | ○ | - |
| | PEI | | - | - | - | - | ○ | - | - | - | - | - |
| | TPI | | - | - | - | - | - | ○ | - | - | - | - |
| | PAR | | - | - | - | - | - | - | ○ | ○ | - | ○ |
| | Glass transition temperature of adhesive layer (B) (°C) | | 225 | 225 | 225 | 225 | 217 | 250 | 193 | 193 | 220 | 193 |
| | Lamination conditions | | One surface*1 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 |
| Surface roughness Ra of asperity roll surface (μm) | | | 0.2 | 0.2 | 0.2 | 0.2 | 0.2 | 0.2 | 0.3 | 0.3 | 0.2 | 0.2 |
| Surface roughness Ra of pressure-bonding roll surface (μm) | | | 0.05 | 0.05 | 0.05 | 0.05 | 0.05 | 0.05 | 0.05 | 0.05 | 0.05 | 0.05 |
| Multilayer film thickness (μm) | | | 27 | 24 | 30 | 35 | 35 | 35 | 34 | 35 | 35 | 50 |
| Thickness proportion of substrate layer (A) (%) | | | 60 | 63 | 60 | 54 | 54 | 56 | 59 | 43 | 42 | 40 |
| Multilayer film evaluated properties | Winding wrinkles | | N | N | N | N | N | N | N | N | N | N |
| | Thermal shrinkage factor 200°C x 15 min. | MD | 0.3 | 0.2 | 0.1 | 0.3 | 0.4 | 0.1 | 0.2 | 0.3 | 0.3 | 0.3 |
| | | TD | 0.1 | 0.1 | 0.1 | 0.1 | 0.1 | 0.1 | 0.1 | 0.2 | 0.1 | 0.1 |
| | Thermal shrinkage factor 250°C x 15 min. | MD | 4.9 | 2.7 | 1.7 | 3.7 | 4.5 | 1.3 | 3.3 | 4.7 | 3.7 | 2.2 |
| | | TD | 1.9 | 1.3 | 1.0 | 1.7 | 3.2 | 0.7 | 2.1 | 2.6 | 1.7 | 1.2 |
| | Heating weight loss ratio (%) | | 1.4 | 1.4 | 1.4 | 1.6 | 1.7 | 1.2 | 1.3 | 1.3 | 1.6 | 1.5 |
| | Light transmittance/400 nm wavelength (%) | | 85 | 85 | 85 | 86 | 84 | 81 | 86 | 82 | 86 | 85 |
| | Total light transmittance (%) | | 86 | 88 | 87 | 87 | 84 | 75 | 87 | 81 | 87 | 86 |
| | Haze value (%) | | 22 | 23 | 24 | 26 | 27 | 33 | 23 | 27 | 26 | 28 |
| Adhesive tape configuration | Adhesive agent layer thickness (μm) | | 30 | 30 | 30 | 30 | 30 | 30 | 30 | 30 | 30 | 30 |
| | Surface laminated with adhesive agent | | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface |
| | Surface roughness Ra of surface not laminated with adhesive agent layer (μm) | | 0.2 | 0.2 | 0.2 | 0.2 | 0.2 | 0.2 | 0.3 | 0.3 | 0.2 | 0.2 |
| Heat-resistant adhesive tape evaluated properties | Initial adhesive force (N/20 mm) | | 3.2 | 3.2 | 2.4 | 2.4 | 3.1 | 4.2 | 4.8 | 4.3 | 2.6 | 2.5 |
| | Judgment | | ◎ | ◎ | ◎ | ◎ | ◎ | ◎ | ◎ | ◎ | ◎ | ◎ |
| | Presence/absence of adhesive residue after heat treatment | | ○ | ○ | ◎ | ○ | ○ | ◎ | ◎ | ◎ | ○ | ○ |

*1: Layer configuration of Figure 1; *2: Layer configuration of Figure 2

| | Type of resin | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Substrate layer (A) | PES | O | O | O | O | O | – | – |
| | Glass transition temperature of substrate layer (A) (°C) | 225 | 225 | 225 | 225 | 225 | – | – |
| | Thickness of substrate layer (A) (µm) | 15 | 20 | 20 | 25 | 18 | – | – |
| Adhesive layer (B) | PES | – | – | – | – | O | – | – |
| | PEEK | O | O | – | – | – | – | – |
| | PC | - | – | O | – | – | – | – |
| | Glass transition temperature of adhesive layer (B) (°C) | 146 | 146 | 150 | – | – | – | – |
| | Lamination conditions | One surface*1 | Both surfaces*2 | Both surfaces*2 | – | Both surfaces*2 | – | – |
| Polyimide film | | – | – | – | – | – | O | – |
| Biaxially stretched polyethylene naphthalate film | | – | – | – | – | – | – | O |
| Surface roughnesss Ra of metal asperity roll surface (µm) | | 0.2 | 0.2 | 0.2 | 0.2 | 0.05 | – | - |
| Surface roughness Ra of pressure-bonding roll surface (µm) | | 0.05 | 0.05 | 0.05 | 0.05 | 0.05 | - | - |
| Film thickness (µm) | | 25 | 35 | 35 | 25 | 30 | 25 | 25 |
| Thickness proportion of substrate layer (A) (%) | | 60 | 57 | 57 | 100 | 60 | – | – |
| Multilayer film evaluated properties | Winding wrinkles | N | N | N | N | Y | – | – |
| | Thermal shrinkage factor 200°C x 15 min. MD | 4.5 | 1.3 | 1.8 | 0.2 | Unevaluated | 0.1 | 2.6 |
| | Thermal shrinkage factor 200°C x 15 min. TD | 2.1 | 0.7 | 0.9 | 0.3 | Unevaluated | 0.1 | 2.1 |
| | Thermal shrinkage factor 250°C x 15 min. MD | 13.4 | 7.8 | 11.3 | 10.7 | Unevaluated | 0.3 | 12.2 |
| | Thermal shrinkage factor 250°C x 15 min. TD | 0.4 | 0.2 | 0.4 | 0.3 | Unevaluated | 0.2 | 12.5 |
| | Heating weight loss ratio (%) | 1.7 | 1.7 | 1.8 | 1.2 | Unevaluated | 5.3 | 0.8 |
| | Light transmittance/400 nm wavelength (%) | 75 | 70 | 67 | 86 | Unevaluated | 0.1 | 78 |
| | Total light transmittance (%) | 78 | 74 | 86 | 88 | Unevaluated | 49 | 84 |
| | Haze value (%) | 28 | 36 | 25 | 21 | Unevaluated | 6 | 14 |
| Adhesive tape configuration | Adhesive agent layer thickness (µm) | 30 | 30 | 30 | 30 | - | 30 | 30 |
| | Surface laminated with adhesive agent | Pressure-bonding roll surface | Pressure-bonding roll surface | Pressure-bonding roll surface | Pressure-bonding roll surface | - | Pressure-bonding roll surface | Pressure-bonding roll surface |
| | Surface roughness Ra of surface not laminated with adhesive agent layer (µm) | 0.2 | 0.2 | 0.2 | 0.2 | Unevaluated | 0.05 | 0.04 |
| Heat-resistant adhesive tape evaluated properties | Initial adhesive force (N/20 mm) | 2.7 | 1.6 | 1.4 | 0.3 | Unevaluated | 3.3 | 2.1 |
| | Judgment | ◎ | ◎ | ◎ | × | | ◎ | ◎ |
| | Presence/absence of adhesive residue after heat treatment | × | × | Unmeasurable | Unmeasurable | Unevaluated | × | Unmeasurable |
| Comments | | | | | Single layer configuration of substrate layer (A) only | Surface roughness outside range | Commercially available PI film | Commercially available PEN film |

*1: Layer configuration of Figure 1; *2: Layer configuration of Figure 2

The multilayer films obtained in Examples 1-10 have excellent moldability (film-formability) without wrinkles occurring during winding, have a small thermal shrinkage factor and a small heating weight loss ratio, and can be suitably used as heat-resistant multilayer films.

Furthermore, due to good UV transmittance, good total light transmittance, and low haze, the films can be suitably used as transparent heat-resistant multilayer films and as heat-resistant adhesive tape substrates that have a UV-cured adhesive agent layer. A multilayer film, in particular those of Examples 2 and 3, which has a substrate layer (A) and an adhesive layer (B) both comprising polyether sulfone (PES), has an overall thickness that satisfies the most preferred condition, and in which the adhesive layer (B) is laminated on both surfaces of the substrate layer (A) has an excellent thermal shrinkage factor and excellent light transmittance. Furthermore, Example 3, in which the thickness proportion of the substrate layer (A) satisfies the most preferred condition, has an extremely small thermal shrinkage factor and is thus excellent from the perspective of having no adhesive residue.

Further, heat-resistant adhesive tapes using these multilayer films have little peeling away after a heat treatment and little adhesive residue, and can therefore be suitably used as a heat-resistant adhesive tape. Particularly in cases wherein a multilayer film in which the substrate layer (A) comprises a polyether sulfone (PES) and the adhesive layer (B) comprises a thermoplastic polyimide (TPI) or a polyarylate (PAR) is used in a heat-resistant adhesive tape, the tape

is excellent in initial adhesive force and in having little adhesive residue after a heat treatment.

(Examples 11-24 and Comparative Examples 8-10)

Apart from changing the resin used in the substrate layer (A), the resin used in the adhesive layer (B), the thicknesses of the multilayer film and the substrate layer (A), the lamination conditions of the adhesive layer (B) (laminating on one side or both sides of the substrate layer (A)), and the laminated surface of the adhesive agent as described in Table 3 and Table 4, and further, using a roll having a different arithmetic mean surface roughness from that of the metal roll, the multilayer film and the heat-resistant adhesive tape were produced in the same way as Example 1.

(Comparative Example 11)

A molding material was obtained without providing the adhesive layer (B) and by adding 1 part by mass of an organic pigment (Paliotol Yellow K 0961 (product name), manufactured by BASF) to 100 parts by mass of the polyether sulfone to serve as the resin constituting the substrate (A) and melt-kneading using the same method as Example 1. This was extruded from a single screw extruder having a diameter of 40 mm to produce a single layer film having a thickness of 25 μm and a heat-resistant adhesive tape.

(Comparative Example 12)

Apart from changing the metal roll to a roll comprising microscopic asperity shapes and having a roll surface with an arithmetic mean surface roughness Ra of 0.1 μm, a multilayer film and heat-resistant adhesive tape were produced in the same way as Example 1.

(Comparative Example 13)

A commercially available polyimide film (Upilex 25S, manufactured by Ube Industries, Ltd., thickness 25 μm) was used. Further, a heat-resistant adhesive tape was made using this film.

(Comparative Example 14)

A commercially available biaxially stretched polyethylene naphthalate film (Teonex Q51, manufactured by Teijin Ltd., thickness 25 μm) was used. Further, a heat-resistant adhesive tape was made using this film.

An evaluation of the laminated films and an evaluation of the heat-resistant adhesive tapes were conducted in the same way as for Examples 1-10 described above. Further, an evaluation was also carried out regarding lifting of the adhesive tapes after vacuum sputtering. The evaluation regarding lifting of the adhesive tapes after vacuum sputtering is based on the following criteria.

(Confirmation of presence/absence of lifting of tape after vacuum sputtering)

Each heat-resistant adhesive tape obtained as described above was slit into 10 mm widths and pressure-bonded to an aluminum plate (100 mm square, thickness 0.5 mm, arithmetic mean surface roughness Ra = 1.0 μm) using one rotation of a 2 kg roller. The pressure-bonded sample was left to stand for 30 minutes at 23°C and then, using a vacuum sputtering device (manufactured by Shincron Co., Ltd.), a vacuum sputtering process was carried out for 60 minutes under conditions of a vacuum level of $10^{-3}$-$10^{-4}$ Pa to laminate an $SiO_2$/SiN alternating film having a total thickness of 0.5 μm. During that time, it is estimated that the maximum temperature of the sample reached 200-250°C. After that, lifting of the heat-resistant adhesive tape (partial peeling away of the heat-resistant adhesive tape) was observed visually and evaluated using the following criteria.

◎: No locations having lifting of heat-resistant adhesive tape

○: 1-9 locations having lifting of heat-resistant adhesive tape

×: 10 or more locations having lifting of heat-resistant adhesive tape

The results for Examples 11-24 and Comparative Examples 8-14 are shown, respectively, in Tables 3 and 4.

[Table 3]

| | Type of resin | | Example 11 | Example 12 | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|---|
| Substrate layer (A) | PES | | ○ | ○ | ○ | ○ | ○ | ○ | - | ○ | ○ | ○ | ○ | ○ | ○ | - |
| | PPSU | | - | - | - | - | | | ○ | - | - | - | - | - | - | ○ |
| | Glass transition temperature of substrate layer (A) (°C) | | 225 | 225 | 225 | 225 | 225 | 225 | 220 | 225 | 225 | 225 | 225 | 225 | 225 | 225 |
| | Thickness of substrate layer (A) (µm) | | 15 | 15 | 15 | 18 | 18 | 18 | 19 | 19 | 19 | 20 | 15 | 15 | 10 | 34 |
| Adhesive layer (B) | PES | | ○ | ○ | ○ | ○ | ○ | ○ | ○ | | | - | - | - | - | - |
| | PPSU | | | | | | | | | | | | | | ○ | - |
| | PEI | | - | - | - | - | - | - | - | ○ | - | - | - | - | - | - |
| | TPI | | - | - | - | - | - | - | - | - | ○ | - | - | - | - | - |
| | PAR | | - | - | - | - | - | - | - | - | - | ○ | ○ | - | - | ○ |
| | Heat-resistant PAR | | - | - | - | - | - | - | - | - | - | - | - | ○ | - | - |
| | Glass transition temperature of adhesive layer (B) (°C) | | 225 | 225 | 225 | 225 | 225 | 225 | 225 | 217 | 250 | 193 | 193 | 263 | 220 | 193 |
| | Lamination conditions | | One surface*1 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 | Both surfaces*2 |
| Surface roughness Ra of asperity roll surface (µm) | | | 0.6 | 0.6 | 0.6 | 0.6 | 1.2 | 2.7 | 0.6 | 0.6 | 0.6 | 0.6 | 0.6 | 0.6 | 0.6 | 0.6 |
| Surface roughness Ra of pressure-bonding roll surface (µm) | | | 0.05 | 0.05 | 0.05 | 0.05 | 0.05 | 0.05 | 0.05 | 0.05 | 0.05 | 0.05 | 0.05 | 0.05 | 0.05 | 0.06 |
| Multilayer film thickness (µm) | | | 27 | 24 | 30 | 30 | 30 | 30 | 35 | 35 | 35 | 34 | 35 | 35 | 24 | 100 |
| Thickness proportion of substrate layer (A) (%) | | | 60 | 63 | 60 | 60 | 60 | 60 | 54 | 54 | 56 | 59 | 43 | 43 | 41 | 45 |
| Multilayer film evaluated properties | Winding wrinkles | | N | N | N | N | N | N | N | N | N | N | N | N | N | N |
| | Thermal shrinkage factor 200°C x 15 min. | MD | 0.3 | 0.2 | 0.1 | 0.1 | 0.1 | 0.1 | 0.3 | 0.4 | 0.1 | 0.2 | 0.3 | 0.1 | 0.2 | 0.3 |
| | | TD | 0.1 | 0.1 | 0.1 | 0.1 | 0.1 | 0.1 | 0.1 | 0.1 | 0.1 | 0.1 | 0.2 | 0.1 | 0.1 | 0.1 |
| | Thermal shrinkage factor 250°C x 15 min. | MD | 4.9 | 2.7 | 1.7 | 1.7 | 1.7 | 1.7 | 3.7 | 4.5 | 1.3 | 3.3 | 4.7 | 0.5 | 2.9 | 3.2 |
| | | TD | 1.9 | 1.3 | 1 | 1.0 | 1.0 | 1.0 | 1.7 | 3.2 | 0.7 | 2.1 | 2.6 | 0.3 | 1.5 | 1.6 |
| | Heating weight loss ratio (%) | | 1.4 | 1.4 | 1.4 | 1.4 | 1.4 | 1.4 | 1.6 | 1.7 | 1.2 | 1.3 | 1.3 | 1.2 | 1.4 | 1.5 |
| | Light transmittance/400 nm wavelength (%) | | 85 | 85 | 85 | 85 | 85 | 85 | 86 | 84 | 81 | 86 | 82 | 80 | 84 | 85 |
| | Haze value (%) | | 22 | 23 | 24 | 24 | 29 | 34 | 28 | 29 | 35 | 25 | 30 | 33 | 33 | 32 |
| Adhesive tape configuration | Adhesive agent layer thickness (µm) | | 30 | 30 | 30 | 30 | 30 | 30 | 30 | 30 | 30 | 30 | 30 | 30 | 30 | 30 |
| | Surface laminated with adhesive agent | | Pressure-bonding roll surface | Pressure-bonding roll surface | Metal asperity roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface | Pressure-bonding roll surface |
| | Surface roughness Ra of surface not laminated with adhesive agent layer (µm) | | 0.6 | 0.6 | 0.05 | 0.6 | 1.2 | 2.7 | 0.6 | 0.6 | 0.6 | 0.6 | 0.6 | 0.6 | 0.6 | 0.6 |
| Heat-resistant adhesive tape evaluated properties | Initial adhesive force (N/20 mm) | | 3.2 | 3.2 | 2.4 | 2.4 | 2.4 | 2.4 | 2.4 | 3.1 | 4.2 | 4.8 | 4.3 | 4.3 | 2.6 | 2.8 |
| | Judgment | | ◎ | ◎ | ◎ | ◎ | ◎ | ◎ | ◎ | ◎ | ◎ | ◎ | ◎ | ◎ | ◎ | ◎ |
| | Presence/absence of adhesive residue after heat treatment | | ○ | ○ | ○ | ◎ | ◎ | ◎ | ○ | ○ | ◎ | ◎ | ◎ | ◎ | ○ | ○ |
| | Adhesive tape lifting after vacuum sputtering | | ○ | ○ | ○ | ◎ | ◎ | ◎ | ○ | ○ | ◎ | ○ | ○ | ◎ | ○ | ○ |

*1: Layer configuration of Figure 1; *2: Layer configuration of Figure 2

[Table 4]

| | | Type of resin | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|
| Substrate layer (A) | PES | | | O | O | O | O | O | – | – |
| | Glass transition temperature of substrate layer (A) (°C) | | | 225 | 225 | 225 | 225 | 225 | – | – |
| | Thickness of substrate layer (A) (μm) | | | 15 | 20 | 20 | 25 | 18 | – | – |
| Adhesive layer (B) | PES | | | – | – | – | – | O | – | – |
| | PEEK | | | O | O | – | – | – | – | – |
| | PC | | | · | – | O | – | – | – | – |
| | Glass transition temperature of adhesive layer (B) (°C) | | | 146 | 146 | 150 | – | – | – | – |
| Lamination conditions | | | | One surface*1 | Both surfaces*2 | Both surfaces*2 | – | Both surfaces*2 | – | – |
| Polyimide film | | | | – | – | – | – | – | O | – |
| Biaxially stretched polyethylene naphthalate film | | | | – | – | – | – | – | – | O |
| Surface roughnesss Ra of metal asperity roll surface (μm) | | | | 0.6 | 0.6 | 0.6 | 0.6 | 0.08 | - | - |
| Surface roughness Ra of pressure-bonding roll surface (μm) | | | | 0.05 | 0.05 | 0.05 | 0.05 | 0.05 | - | - |
| Film thickness (μm) | | | | 25 | 35 | 35 | 25 | 30 | 25 | 25 |
| Thickness proportion of substrate layer (A) (%) | | | | 60 | 57 | 57 | 100 | 60 | – | – |
| Multilayer film evaluated properties | Winding wrinkles | | | N | N | N | N | Y | – | – |
| | Thermal shrinkage factor 200°C x 15 min. | MD | | 4.5 | 1.3 | 1.8 | 0.2 | Unevaluated | 0.1 | 2.6 |
| | | TD | | 2.1 | 0.7 | 0.9 | 0.3 | Unevaluated | 0.1 | 2.1 |
| | Thermal shrinkage factor 250°C x 15 min. | MD | | 13.4 | 7.8 | 11.3 | 10.7 | Unevaluated | 0.3 | 12.2 |
| | | TD | | 0.4 | 0.2 | 0.4 | 0.3 | Unevaluated | 0.2 | 12.5 |
| | Heating weight loss ratio (%) | | | 1.7 | 1.7 | 1.8 | 1.2 | Unevaluated | 5.3 | 0.8 |
| | Light transmittance/400 nm wavelength (%) | | | 75 | 70 | 67 | 86 | Unevaluated | 0.1 | 78 |
| | Haze value (%) | | | 28 | 36 | 25 | 21 | Unevaluated | 6 | 14 |
| Adhesive tape configuration | Adhesive agent layer thickness (μm) | | | 30 | 30 | 30 | 30 | - | 30 | 30 |
| | Surface laminated with adhesive agent | | | Pressure-bonding roll surface | Pressure-bonding roll surface | Pressure-bonding roll surface | Pressure-bonding roll surface | - | – | – |
| | Surface roughness Ra of surface not laminated with adhesive agent layer (μm) | | | 0.6 | 0.6 | 0.6 | 0.6 | Unevaluated | 0.05 | 0.05 |
| Heat-resistant adhesive tape evaluated properties | Initial adhesive force (N/20 mm) | | | 2.7 | 1.6 | 1.4 | 1.3 | Unevaluated | 3.3 | 2.1 |
| | Judgment | | | ◎ | ◎ | ◎ | × | Unevaluated | ◎ | ◎ |
| | Presence/absence of adhesive residue after heat treatment | | | × | × | Unmeasurable | Unmeasurable | Unevaluated | × | Unmeasurable |
| | Adhesive tape lifting after vacuum sputtering | | | × | × | × | × | Unevaluated | O | × |
| Comments | | | | Glass transition temperature of adhesive layer (B) outside range | | | Single layer configuration | Surface roughness outside range | Commercially available PI film | Commercially available PEN film |

*1: Layer configuration of Figure 1; *2: Layer configuration of Figure 2

The multilayer films obtained in Examples 11-24 also have excellent moldability (film-formability) without wrinkles occurring during winding, have a small thermal shrinkage factor and a small heating weight loss ratio, and can be suitably used as a heat-resistant multilayer film. Further, it became apparent that in heat-resistant adhesive tapes obtained from these multilayer films, lifting of the adhesive tape after vacuum sputtering is suppressed.

Furthermore, due to good UV transmittance, good total light transmittance, and low haze, the films can be suitably used as transparent heat-resistant multilayer films and as heat-resistant adhesive tape substrates that have a UV-cured adhesive agent layer. A multilayer film, in particular those of Examples 12-16, which has a substrate layer (A) and an adhesive layer (B) both comprising polyether sulfone (PES), has an overall thickness that satisfies the most preferred condition, and in which the adhesive layer (B) is laminated on both surfaces of the substrate layer (A) has an excellent thermal shrinkage factor. Furthermore, Examples 14-16, in which the thickness proportion of the substrate layer (A) satisfies the most preferred condition, have an extremely small thermal shrinkage factor and are thus excellent from the perspective of having no adhesive residue. As shown in Examples 19 and 22, cases in which a thermoplastic polyimide (TPI) or a heat-resistant PAR (heat-resistant polyarylate) is used in the adhesive layer (B) result in a suitable multilayer film having a particularly small thermal shrinkage factor.

Further, the same as described above, heat-resistant adhesive tapes using these multilayer films have little peeling away after a heat treatment and little adhesive residue, and can therefore be suitably used as a heat-resistant adhesive tape. Particularly in Examples 14-16, 19, and 22 described above, wherein a multilayer film in which the substrate layer (A) comprises a polyether sulfone (PES) and the adhesive layer (B) comprises a thermoplastic polyimide (TPI) or a heat-resistant polyarylate (PAR) is used in a heat-resistant adhesive tape, the tape is excellent in initial adhesive force and in having no adhesive residue after a heat treatment, and also in having high durability in a sputtering process.

**REFERENCE SIGNS LIST**

1 Example showing a layer configuration of the multilayer film of the present invention

2 Adhesive layer (B)

3 Substrate layer (A)

4 Example showing a layer configuration of the heat-resistant adhesive tape of the present invention

5 Adhesive agent layer

## Claims

1. A multilayer film having alternately laminated therein one or more layers of each of a substrate layer (A) including a sulfone-based resin having a glass transition temperature of 200°C or more and an adhesive layer (B) including a thermoplastic resin having a glass transition temperature of 190°C or more, wherein: at least one outermost layer of the multilayer film comprises the adhesive layer (B); and an arithmetic mean surface roughness Ra of a surface of at least one outermost layer of the multilayer film is greater than 0.1 $\mu$m and less than 0.5 $\mu$m.

2. A multilayer film having alternately laminated therein one or more layers of each of a substrate layer (A) including a sulfone-based resin having a glass transition temperature of 200°C or more and an adhesive layer (B) including a thermoplastic resin having a glass transition temperature of 190°C or more, wherein: at least one outermost layer of the multilayer film comprises the adhesive layer (B); and an arithmetic mean surface roughness Ra of a surface of at least one outermost layer of the multilayer film is 0.5 $\mu$m or more and less than 10.0 $\mu$m.

3. The multilayer film according to claim 1 or 2, wherein: the sulfone-based resin of the substrate layer (A) is at least one selected from the group consisting of polyether sulfone and polyphenyl sulfone; and the thermoplastic resin of the adhesive layer (B) is at least one selected from the group consisting of polyether imide, polyether sulfone, polyphenyl sulfone, thermoplastic polyimides, and polyarylates.

4. The multilayer film according to claim 3, wherein the polyarylate used is a heat-resistant polyarylate having a glass transition temperature (Tg) of 245°C or more.

5. The multilayer film according to any one of claims 1 to 4, wherein at least one layer of the substrate layer (A) and the adhesive layer (B) includes at least one additive selected from a thermal stabilizer, a UV absorption agent, an antistatic agent, a glidant, a dye, and a pigment.

6. The multilayer film according to any one of claims 1 to 5, wherein: the overall thickness of the multilayer film is 20 $\mu$m or more and 150 $\mu$m or less; and the proportion of the thickness of the substrate layer (A) is 35% or more and 80% or less.

7. The multilayer film according to any one of claims 1 to 6, wherein the multilayer film has: a thermal shrinkage factor after being exposed to an environment of 230°C for 15 minutes of 1.0% or less; and a thermal shrinkage factor after being exposed to an environment of 250°C for 15 minutes of 5.0% or less.

8. The multilayer film according to any one of claims 1 to 7, wherein the multilayer film has a heating weight loss ratio, when exposed to an environment of 250°C for one hour, of 5% or less.

9. The multilayer film according to any one of claims 1 to 8, wherein the multilayer film has a light transmittance at a 400 nm wavelength of 80% or more.

10. A heat-resistant adhesive tape formed by laminating an adhesive agent layer on the adhesive layer (B) of the multilayer film according to any one of claims 1 to 9.

11. The heat-resistant adhesive tape according to claim 10, wherein only the substrate layer (A) includes at least one additive selected from a thermal stabilizer, a UV absorption agent, an antistatic agent, a glidant, a dye, and a pigment.

12. The heat-resistant adhesive tape according to claim 10 or 11, wherein the heat-resistant adhesive tape is a masking tape.

13. A method for producing the multilayer film according to any one of claims 1 to 9, wherein the substrate layer (A) including a sulfone-based resin having a glass transition temperature of 200°C or more and the adhesive layer (B) including a thermoplastic resin having a glass transition temperature of 190°C or more are laminated using a co-extrusion method and a film that is melt-extruded from a T-die at a resin temperature of 330°C or more is caused to contact a metal roll having a surface temperature of 110°C or more to mold the multilayer film.

[Figure 1]

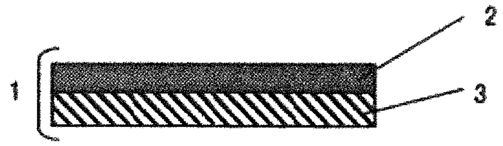


[Figure 2]

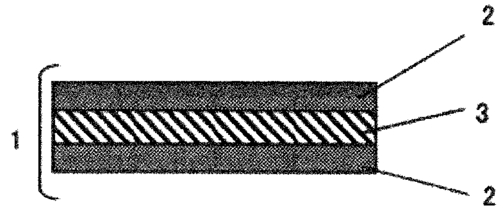


[Figure 3]

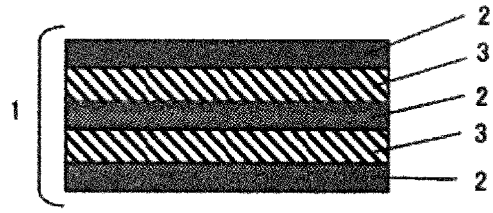


[Figure 4]

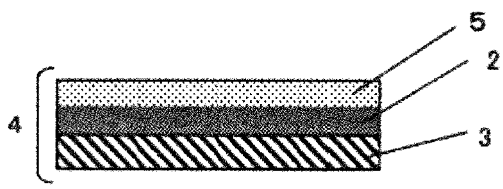

[Figure 5]

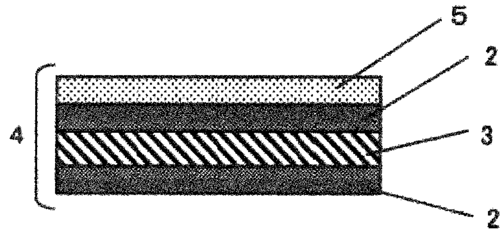


[Figure 6]

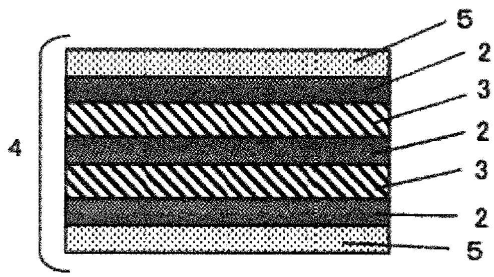

## INTERNATIONAL SEARCH REPORT

International application No.
PCT/JP2018/014131

A. CLASSIFICATION OF SUBJECT MATTER
Int.Cl. B32B27/00(2006.01)i, B29C47/06(2006.01)i, C09J181/06(2006.01)i, C09J201/00(2006.01)i, B29K81/00(2006.01)n, B29L7/00(2006.01)n, B29L9/00(2006.01)n
According to International Patent Classification (IPC) or to both national classification and IPC

B. FIELDS SEARCHED
Minimum documentation searched (classification system followed by classification symbols)
Int.Cl. B32B1/00-43/00, B29C47/00-47/96, C09J181/06, C09J201/00, B29K81/00, B29L7/00, B29L9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-301784 A (TORAY INDUSTRIES) 22 November 2007, claims, paragraphs [0056], [0057], [0071]-[0078]<br>(Family: none) | 1-8, 13<br>9-12 |
| X<br>A | JP 2013-226817 A (TORAY INDUSTRIES) 07 November 2013, claims, paragraphs [0020], [0025], [0069]-[0075], [0093]-[0144]<br>(Family: none) | 2-6, 9, 13<br>1, 7, 8, 10-12 |
| Y<br>A | JP 2010-242066 A (TORAY INDUSTRIES) 28 October 2010, claims, paragraph [0027]<br>(Family: none) | 1, 5-8, 10-12<br>2-4, 9, 13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19.06.2018 | 26.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/014131

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2010-131809 A (TOYOBO CO., LTD.) 17 June 2010, paragraphs [0002], [0023]<br>& US 2011/0236635 A1, paragraphs [0004], [0048] & WO 2010/064616 A1 & EP 2354179 A1 & TW 201035185 A & CN 102239204 A & KR 10-2011-0101178 A | 1, 5-8, 10-12<br>2-4, 9, 13 |
| X<br><br>A | JP 2003-043204 A (SOMAR CORPORATION) 13 February 2003, claims, paragraphs [0018], [0019], [0030], [0034]-[0039]<br>(Family: none) | 2, 3, 5-8, 10, 11<br>1, 4, 9, 12, 13 |
| A | JP 2001-179826 A (TORAY INDUSTRIES) 03 July 2001, claims, paragraphs [0045]-[0067]<br>(Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013193413 A
- JP H01266177 A
- JP 2003249617 A
- JP 2000233436 A
- JP 2004168962 A
- JP 2005103951 A